## Europäisches Patentamt

## European Patent Office

## Office européen des brevets

(11) Veröffentlichungsnummer: **0 113 332**
A1

(12) # EUROPÄISCHE PATENTANMELDUNG

(21) Anmeldenummer: 83890235.1

(22) Anmeldetag: 23.12.83

(51) Int. Cl.³: **B 23 B 27/06**
B 23 B 27/14, B 23 B 29/04

(30) Priorität: 03.01.83 AT 1/83

(43) Veröffentlichungstag der Anmeldung:
11.07.84 Patentblatt 84/28

(84) Benannte Vertragsstaaten:
IT

(71) Anmelder: **METALLWERK PLANSEE GESELLSCHAFT M.B.H.**

**A-6600 Reutte, Tirol(AT)**

(72) Erfinder: **Dupont, Orly**
**Lindenstrasse 21**
**A-6600 Reutte Tirol(AT)**

(74) Vertreter: **Lohnert, Wolfgang, Dr.**
**Metallwerk Plansee GmbH**
**A-6600 Reutte, Tirol(AT)**

(54) Schneideinsatz zum Gewindedrehen.

(57) Ein Schneideinsatz (1) zum Gewindedrehen besteht aus einem in etwa prismenförmigen Grundkörper mit einem zahnförmigen profilierten Schneidenabschnitt (2) mit einer der Schneidkantenfreifläche gegenüberliegenden Anlagefläche (5) und zwei im wesentlichen quer zur Schneidkantendreifläche verlaufenden seitlichen Flächen (6,7) von denen mindestens eine als Anlage bzw. Spannfläche (6) ausgebildet ist. Erfindungsgemäß ist dem zahnförmig profilierten Schneidenabschnitt (2) in Zerspanungsrichtung ein Schneidenabschnitt vorgelagert. Dieser Schneidenabschnitt weist einen speziellen Aufbau mit einer Haupt– (3) und einer Nebenschneide (4) auf, der dem Aufbau von Schneideinsätzen zum Schälen vergleichbar ist. Mit Hilfe dieses Schneideinsatzes können insbesondere bei Rohren, Bohrgestängen und Muffen für die Erdöl– und Erdgasindustrie die erforderlichen Gewinde in einem einzigen Arbeitsgang hergestellt werden, ein Justieren von einzelnen Schneideinsätzen zueinander kann entfallen.

Fig. 1

## SCHNEIDEINSATZ ZUM GEWINDEDREHEN

Die Erfindung betrifft einen Schneideinsatz zum Gewindedrehen, bestehend aus einem in etwa prismenförmigen Grundkörper mit einem zahnförmig profilierten Schneidenabschnitt mit einer der Schneidkantenfreifläche gegenüber liegenden Anlagefläche und im wesentlichen quer zu der Schneidkantenfreifläche verlaufenden, seitliche Flächen, von denen mindestens eine als Anlage- bzw. Spannfläche ausgebildet ist.

Gewinde mit großen Gewindesteigungen und Gewindetiefen, wie sie z.B. bei Rohren, Muffen und Bohrgestängen für die Erdöl- und Erdgasindustrie auftreten, werden auf großen Bearbeitungszentren hergestellt. Um bei der Herstellung dieser Gewinde möglichst rationell zu arbeiten, erfolgt das Abdrehen des Rohres oder der Welle und das Gewindeschneiden in einem einzigen Bearbeitungsschritt. Dazu werden der Schneideinsatz zum Abdrehen des Werkstückes auf den gewünschten Nenndurchmesser des Gewindes und der Schneideinsatz zum Schneiden des Gewindes in der Regel in zwei Werkzeughaltern, die auf einem gemeinsamen Support aufgespannt sind, hintereinander angeordnet. Der Gewindeschneideinsatz weist dabei in der Regel eine mehrzahnige Profilierung auf, wobei die Profiltiefe der aufeinanderfolgenden Zähne zwischen einem Minimalwert und einem Höchstwert entsprechend der gewünschten Gewindetiefe abgestuft ist.

Entsprechende Gewindeschneideinsätze dieser Art sind zum Beispiel in den US-PS 3 176 330 und 4 122 194 beschrieben.

Die Gewinde für Rohre, Bohrgestänge und Muffen für die Erdöl- und Erdgasindustrie müssen äußerst genau gearbeitet sein und dürfen nur kleine Fertigungstoleranzen aufweisen, dies insbesondere dort, wo die Gewindeverbindung aus Sicherheitsgründen gasdicht zu sein hat. Aus diesem Grund sind die Schneidkanten der einzelnen Schneideinsätze präzisionsgeschliffen, um möglichst enge Fertigungstoleranzen zu gewährleisten.

Darüberhinaus werden die Werkstücke vielfach mit zwei oder auch drei Werkzeugpaaren auf Supporten, die gleichmäßig über den Umfang des Werkstückes verteilt und entsprechend der Gewindesteigung versetzt angeordnet sind, gleichzeitig bearbeitet, um ein Schwingen und damit zu große Fertigungstoleranzen am Gewinde auszuschließen.

Nachteilig bei dieser Art der Gewindeherstellung ist die notwendigerweise äußerst präzise und daher langwierige Justierung der einzelnen Schneideinsätze eines Werkzeugpaares zueinander. Nur so lassen sich die engen Fertigungstoleranzen einhalten. Insbesondere, wenn drei Werkzeugpaare eingesetzt werden, ist mit der Justierung der einzelnen Schneideinsatzpaare ein erheblicher Zeitaufwand verbunden.

Der Erfindung liegt nun die Aufgabe zugrunde, eine Schneidplatte zum Gewindedrehen zu schaffen, mit deren Hilfe ein aufwendiges Ausrichten von einzelnen Schneideinsätzen zueinander entfallen kann und mit der deshalb eine wesentlich wirtschaftlichere Fertigung ermöglicht wird.

Erfindungsgemäß wird dies dadurch erreicht, daß dem zahnförmig profilierten Schneidenabschnitt des Schneideinsatzes in Zerspanungsrichtung ein Schneidenabschnitt vorgelagert ist, welcher einen demjenigen von Schneideinsätzen zum Schälen vergleichbaren Aufbau mit einer Haupt- und einer Nebenschneide aufweist.

Die Bearbeitung des Werkstückes erfolgt also nicht mehr wie bisher mit zwei verschiedenen Schneideinsätzen, sondern mit einem einzigen Schneideinsatz. Der erfindungsgemäße Schneideinsatz kann in einem Arbeitsgang über seine gesamte Schneidkante mit einer entsprechend profilierten Schleifscheibe präzisionsgeschliffen werden. Die einzelnen Schneidkantenabschnitte sind dadurch automatisch unter höchster Präzision aufeinander abgestimmt. Das bisher notwendige, aufwendige Einjustieren der Schneidkanten entfällt damit. Die Oberfläche des Werkstückes wird für das Gewindeschneiden durch den unmittelbar vorauseilenden Schneidenabschnitt, der eine Geometrie ähnlich jener von Schneideinsätzen zum Schälen aufweist, optimal vorgearbeitet.

Trotz der im Vergleich zu bekannten Gewindeschneideinsätzen wesentlich längeren, gleichzeitig im Einsatz befindlichen Schneidkante und damit einer größeren Erwärmung der Schneidkante treten überraschenderweise keinerlei Kammrisse als Folge zu großer Wärmespannungen auf.

Mehrere, gleichzeitig nebeneinander ablaufende Zerspanungsoperationen bergen die Gefahr in sich, daß die Späne eines Zerspanungsvorganges in den Schneidbereich des anderen Zerspanungsvorganges gelangen und dabei letzteren Schneideinsatz und/oder die zu bearbeitende Werkstückoberfläche beschädigen. Der Fachmann wird daher immer danach trachten, ganz besonders aber bei Präszisionszerspanungen mehrere, gleichzeitig ablaufende Zerspanungsvorgänge örtlich voneinander zu trennen. Doch entgegen entsprechender Befürchtungen tritt eine Beschädigung des profilierten Gewindeschneidabschnittes durch die von der Hauptschneidkante erzeugten Schruppspäne, die im Vergleich zu den von der Gewindeschneidplatte erzeugten Spänen um vieles größer sind, infolge vorteilhaft konzipierter Schneidengeometrie nicht auf.

In einer besonders vorteilhaften Ausgestaltung weist der erfindungsgemäße Schneideinsatz einen zahnförmig profilierten Schneidenabschnitt mit drei Zähnen abgestufter Profiltiefe sowie einen in Zerspanungsrichtung vorgelagerten Schneidenabschnitt mit einer geradlinig unter einem Einstellwinkel von $25^\circ$ zur Gewindelängsachse verlaufenden Hauptschneide und mit einer geradlinig parallel zur Gewindelängsrichtung verlaufenden Nebenschneide, auf.

Mit Hilfe dieses Schneideinsatzes können Gewinde an Rohren, Muffen oder Bohrgestängen für die Erdölindustrie auch entsprechend der API-Norm angefast werden. Das Werkstück wird dabei in einem ersten Arbeitsschritt mit der Hauptschneide angefast. Anschließend wird das Werkstück in einem Arbeitsgang mit der Hauptschneide abgedreht, mit der Nebenschneide geglättet und gleichzeitig wird mit dem zahnartig profilierten Abschnitt das Gewinde eingeschnitten. Abschließend wird die Fase des Gewindes mit der Hauptschneide entgratet.

Der erfindungsgemäße Schneideinsatz ist sowohl zur Herstellung von Außengewinden als auch von Innengewinden einsetzbar. Der erfindungsgemäße Schneideinsatz kann sowohl mit einer als auch mit zwei jeweils kombinierten Schneidkanten als Wendeschneidplatte ausgeführt sein. Er kann darüberhinaus als positiver oder negativer Schneideinsatz ausgeführt sein. Insbesondere bei Schneideinsätzen mit negativer Schneidengeometrie ist es vorteilhaft, eine parallel zu den Schneidkanten verlaufende Spanleitstufe vorzusehen, um eine optimale Spanbildung und Spanbrechung zu erzielen.

Weist der erfindungsgemäße Schneideinsatz nur eine Schneidkante auf, so ist die der Schneidkantenfreifläche gegenüber liegende Seitenfläche als Anlagefläche ausgebildet. Die dem zahnartig profilierten Schneidenabschnitt benachbarte, in etwa quer zur Schneidkante verlaufende Seitenfläche dient ebenfalls als Anlagefläche.

In der erfindungsgemäßen Ausführung als Wendeschneidplatte sind die beiden Schneidkanten gegenüberliegend angeordnet. Für eine sichere Abstützung und Positionierung des Schneideinsatzes im Werkzeughalter muß in diesem Fall die Aufnahme für den Schneideinsatz im Halter den Schneidkanten angepaßt werden, so daß auch die nicht im Einsatz befindlichen Schneidenabschnitte zumindest teilweise eine Anlage am Werkzeughalter finden.

Die Erfindung wird nun an Hand von Figuren näher erläutert.

Figur 1 zeigt einen Schneideinsatz entsprechend der Erfindung.

Figur 2 zeigt eine weitere Ausführung eines erfindungsgemäßen Schneideinsatzes als Wendeschneidplatte.

Figur 3 zeigt einen erfindungsgemäßen Schneideinsatz im zugehörigen Werkzeughalter.

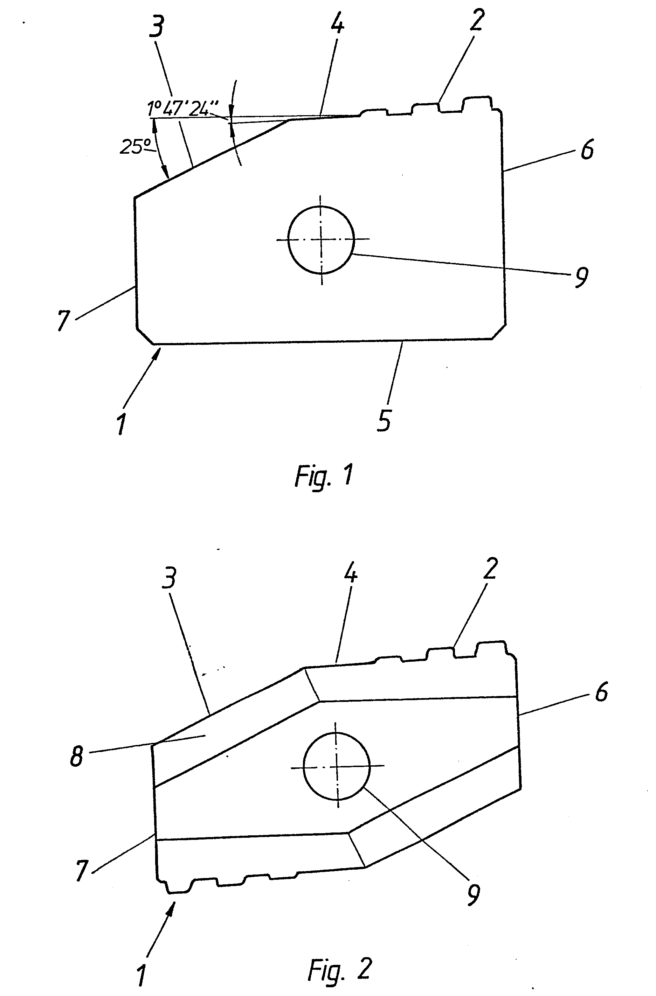

Figur 1 zeigt einen erfindungsgemäßen, positiven Schneideinsatz -1- mit einer Schneidkante zur Herstellung eines Buttressgewindes nach API-Norm. Der Schneideinsatz -1- weist einen zahnartig profilierten Schneidenabschnitt -2- mit drei Zähnen auf. Die drei Zähne sind trapezförmig geformt und weisen eine abgestufte Profiltiefe auf. Dem zahnartig profilierten Schneidenabschnitt -2- ist in Zerspanungsrichtung ein Schneidenabschnitt vorgelagert, der eine Schneidengeometrie mit einer linearen Hauptschneide -3- und einer linearen Nebenschneide -4- aufweist, die etwa der Schneidengeomtrie von bekannten Schneideinsätzen zum Schälen entspricht. Die Hauptschneide -3- weist einen Einstellwinkel von 25° zur Gewindelängsachse auf. Die Nebenschneidkante verläuft parallel zur Gewindelängsrichtung und weist in diesem speziellen Fall zur Herstellung eines kegelförmigen Buttressgewindes einen Einstellwinkel von 1° 47' 24'' zur Gewindelängsachse auf. Die der Schneidkantenfreifläche gegenüberliegende Seitenfläche verläuft etwa parallel zur Gewindelängsachse und ist als Anlagefläche -5- ausgebildet. Von den quer zur Schneidkantenfreifläche verlaufenden seitlichen Flächen -6-, -7-, ist die Fläche -6- als Anlagefläche ausgebildet. Die

Flächen -6- und -5- sind ebenso wie die Schneidkante präzisionsgeschliffen um im Werkzeughalter eine genaue Positionierung des Schneideinsatzes ohne aufwendiges Einjustieren zu ermöglichen. Der Schneideinsatz weist eine zentrale Bohrung -9- auf, über die eine Kühlmittelzufuhr zur Schneidkante ermöglicht wird.

Figur 2 zeigt einen erfindungsgemäßen Schneideinsatz -1- mit negativer Schneidengeometrie, der als Wendeschneidplatte ausgeführt ist. Er weist zwei gegenüberliegende Schneidkanten auf. Parallel zu jeder Schneidkante verläuft ein Spanbrecher -8-, der eine verbesserte Spanbildung und Spanabführung ermöglicht.

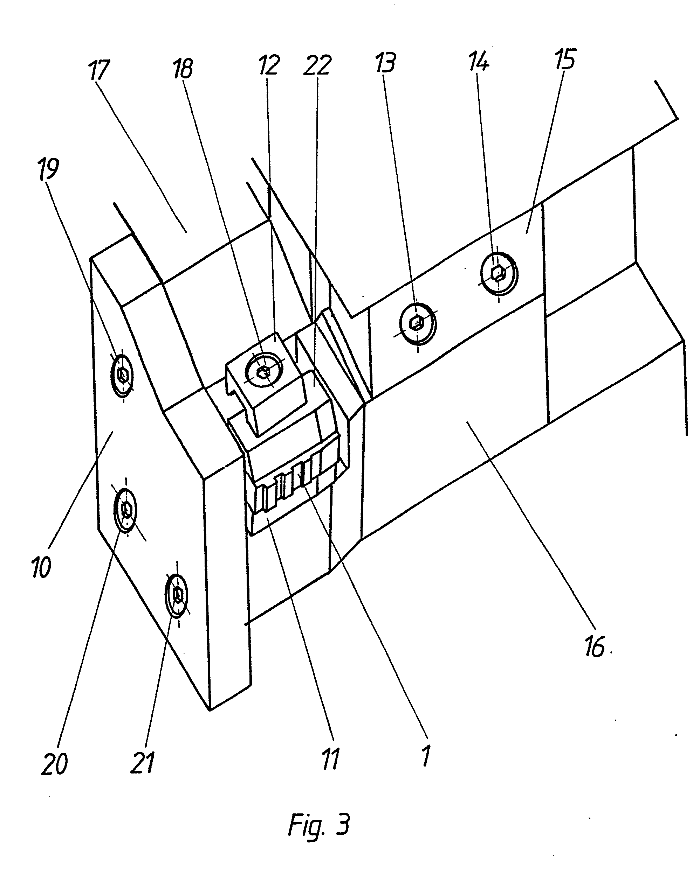

Figur 3 zeigt einen erfindungsgemäßen Schneideinsatz -1-, der in einem zugehörigen Kurzklemmhalter -16- eingespannt ist. Der Kurzklemmhalter -16- ist über einen Klemmkeil -15- und Schrauben -13-, -14- in einer Ausnehmung am Maschinensupport 17- festgespannt. Die seitliche Anschlagplatte -10-, die mit der Schraube -19- am Support -17- befestigt ist, dient zugleich als Anlagefläche für den Kurzklemmhalter -16- und für den Gewindeschneideinsatz -1-. Der Gewindeschneideinsatz -1- ist in einer Ausnehmung des Kurzklemmhalters -16- auf einer Unterlagsplatte -11- angeordnet. Die Klemmung des Schneideinsatzes -1- erfolgt durch eine Klemmpratze -12- die mit einer Schraube -18- mit dem Halter verschraubbar ist und die den Schneideinsatz -1- über einen Spanbrecher -22- auf die Unterlagsplatte -11- drückt.

Der erfindungsgemäße Schneideinsatz ist insbesondere zur Herstellung von Gewinden an Rohren, Muffen oder Bohrgestängen für die Erdöl- und Erdgasindustrie geeignet.

8 0113332

Er ist jedoch selbstverständlich auch vorteilhaft für die Herstellung von Gewinden an anderen Werkstücken einsetzbar.

Die Erfindung ist nicht auf die Ausführungsbeispiele beschränkt. Abweichend von denjenigen, in den Figuren dargestellten Ausführungen können beispielsweise die seitlichen Flächen des Schneideinsatzes sein. So können die seitlichen Flächen eine von einer linearen Form abweichende Formgebung aufweisen, um eine seitliche Klemmung bzw. eine bessere Anlage des Schneideinsatzes zu ermöglichen.

Ebenso kann die seitliche Anlagefläche einen Winkel $90^o$ mit der Werkstücklängsachse einschließen um ein seitliches Verkippen des Schneideinsatzes zu verhindern.

Auch ist es denkbar, den Schneideinsatz mit mehreren Bohrungen zu versehen, über die ein Festklemmen des Schneideinsatzes erfolgen kann.

PATENTANSPRÜCHE

1. Schneideinsatz (1) zum Gewindedrehen, bestehend aus einem in etwa prismenförmigen Grundkörper mit einem zahnförmig profilierten Schneidenabschnitt (2), mit einer der Schneidkantenfreifläche (5) gegenüberliegenden Anlagefläche und zwei im wesentlichen quer zur Schneidkantenfreifläche verlaufenden, seitlichen Flächen (6,7), von denen mindestens eine als Anlage- bzw. Spannfläche (6) ausgebildet ist, d a d u r c h  g e k e n n z e i c h n e t, daß dem zahnförmig profilierten Schneidenabschnitt (2) des Schneideinsatzes (1) in Zerspanungsrichtung ein Schneidenabschnitt vorgelagert ist, welcher einen demjenigen von Schneideinsätzen zum Schälen vergleichbaren Aufbau mit einer Haupt- (3) und einer Nebenschneide (4) aufweist.

2. Schneideinsatz zum Gewindedrehen nach Anspruch 1, dadurch gekennzeichnet, daß er einen zahnförmig profilierten Schneidenabschnitt (2) mit drei Zähnen abgestufter Profiltiefe sowie einen in Zerspanungsrichtung vorgelagerten Schneidenabschnitt mit einer geradlinig unter einem Einstellwinkel von 25$^{o}$ zur Gewindelängsachse verlaufenden Hauptschneide (3) und einer geradlinig, parallel zur Gewindelängsrichtung verlaufenden Nebenschneide (4), aufweist.

3. Schneideinsatz zum Gewindedrehen nach Anspruch 1 oder 2, dadurch gekennzeichnet, daß er als Wendeschneidplatte mit zwei gegenüberliegenden Schneidkanten ausgeführt ist.

330 EU
20.12.1983

METALLWERK PLANSEE
GESELLSCHAFT M.B.H.

Dr.Wolfgang Lohnert
(Allg. Vollmacht Nr. 6043)

1/2

0113332

1°47'24"

25°

Fig. 1

Fig. 2

Fig. 3

Europäisches Patentamt

# EUROPÄISCHER RECHERCHENBERICHT

**0113332**
Nummer der Anmeldung

EP 83 89 0235

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-1 936 696 (THOMSON) <br> * Seite 4, Zeilen 40-54; Figur 18 * | 1 | B 23 B 27/06 <br> B 23 B 27/14 <br> B 23 B 29/04 |
| X | US-A-2 004 333 (MAURER) <br> * Seite 1; Figuren 1,2,3,5 * | 1,2 | |
| A | US-A-1 978 427 (HOGG) | 1 | |
| A | EP-B-0 062 621 (SANTRADE) | | |
| A | DE-A-3 033 626 (HERTEL) | | |
| A | DE-A-2 637 757 (HERTEL) | | RECHERCHIERTE SACHGEBIETE (Int. Cl. 3) |
| A | US-A-4 123 194 (CAVE) | | B 23 B 27/00 <br> B 23 B 29/00 |
| T | DE-A-3 204 999 (MÜLLER) | 3 | |
| T | DE-A-3 129 451 (SANTRADE) | 3 | |

Der vorliegende Recherchenbericht wurde für alle Patentansprüche erstellt.

| Recherchenort | Abschlußdatum der Recherche | Prüfer |
|---|---|---|
| DEN HAAG | 14-03-1984 | BOGAERT F.L. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82